# EUROPEAN PATENT APPLICATION

(11) **EP 2 253 892 A2**
(43) Date of publication of application: **24.11.2010**
(21) Application number: 10004865.1
(22) Date of filing: 07.05.2010
(51) Int. Cl.: F24D 11/02

(54) **Method for using heat released through natural ventilation within a central heating system of a building and for producing hot water**

(30) Priority: 08.05.2009 EE 200900046 U
(71) Applicant: Kruusel, Liivo, 74013 Harju maakond (EE)
(72) Inventor: Kruusel, Liivo, 74013 Harju maakond (EE); Pihtjõe, Indrek, 13522 Tallinn (EE)
(74) Representative: Koitel, Raivo

(57) **Abstract**

The invention discusses a method for using heat, released by natural ventilation, in a central heating of a building (apartment houses included), including the production of hot water.

By applying the method, it is possible to diminish heat loss, caused by air leaving the building by means of natural ventilation, and adjust the air volumes, if appropriate, by taking the specificities of natural ventilation into consideration. For that purpose, a heating system will be linked, by means of natural ventilation, with released air at room temperature, which will be then conducted to the existing heating system of the building through air-to-water heat exchanger and heat pump, to recover the heat into heating elements and for producing hot water. Additionally, this method allows to adjust the air volumes, removed by means of natural ventilation, by floors and also the changes in outflow air volumes, caused by external factors. Such a method can replace exhaust by natural ventilation into forced exhausted with heat exchanger; it gives an opportunity of adjusting air exchange in rooms, conducting all the air, removed by means of ventilation, through a heat exchanger.

## Description

### Field of invention

This invention belongs to the field of construction physics, more specifically, the field of ventilation and heating systems of a building, and relates to the use of heat, released through natural ventilation of a building, within a central heating system of a building, producing of hot water included.

### Prior art

Ventilation of a building is known to be based on two systems: natural and forced ventilation system.

In buildings exploiting forced ventilation system, incoming air can be warmed with air exiting through a heat exchanger and by additional heating. Construction of a forced ventilation system requires, by general rule, lots of extra spacing for fitting pipelines, which means extra expenditures. Therefore, the general tendency is to prefer natural ventilation in residential buildings.

Heated air is removed from a building by air exchange in buildings with natural ventilation. According to the estimates, the heat loss, accompanying air exchange, is expected to total to approximately 30-50% of the heating balance of the building, depending on insulation quality of the building.

The efficiency of natural ventilation is dependant on a number of components: difference in indoor and outdoor temperatures, wind (the stronger is the difference in temperatures and the wind (wind direction), the larger is the air exchange), number of floors in multi-storeyed buildings (above all, in older buildings, where air volumes are not adjusted by means of ducts or dampers with different diameter, therefore, in ducts with equal cross section areas the air exchange is dependent on the length of ventilation ducts; the longer is the duct, the larger is air exchange). Large air exchange volumes will also remove more heat or the heat bills will be bigger (especially where the air exchange volumes are bigger than necessary).

If at lower floor the ventilation problems mostly involve over-ventilation, then upper floors may face issues of under-ventilation. Under-ventilation will mean damages caused by moisture for a building or a room (dampness, mould, fungi, bacteria), which may damage, apart the micro-climate of the building, also its structures. Under-ventilation will also affect the health of people (above all, in long-term perspective).

The easiest method for improving under-ventilation is to fit premises with local fans and ensure supply of fresh air. As during the project design process (in older residential houses) the incoming air supply volume is based on openings and permeability of structures, an air transfer valve must be often added to ensure the inflow of fresh air in buildings, where old wooden windows have been replaced for plastic windows without ventilation openings.

It is also known that natural ventilation can be reconstructed into forced ventilation. The simplest method would be to direct incoming air through an air-to-air heat exchanger and then into the building. Long pipelines must be built to make this solution work properly, accompanied by space and repair requirements, which also mean large expenditures. Therefore, this is not a widely used option.

Air-to-air or air-to-water heat pumps for heating buildings are widely known. These are used to accumulate heat from outdoor air, which is then guided into the building, using either air or fluid as the media transmitting heat.

Ventilation heat recovery pumps (see www.ivt.ee), which are good for new or renovated small residential buildings, are also known. Air volumes exiting the ventilation system are conducted through a heat pump, connected to the heating system of the building, by means of forced exhaust. Scope of application, which is limited to smaller buildings, is the disadvantage of such a solution.

### Description of the invention

The purpose of this invention is to create a method, characterised by a short profitability period, which would also be suitable for larger and older buildings (incl. apartment houses) and would diminish heat loss, caused by air leaving the building by means of natural ventilation, considerably, while taking the specificities of natural ventilation into consideration.

For that purpose, a heating system will be linked, by means of natural ventilation, with released air at room temperature, which will be then conducted to the existing heating system of the building through air-to-water heat exchanger and heat pump, to recover the heat into heating elements (radiators, floor heating) and for producing hot water. The given method will provide an opportunity to use the heat pump with improved efficiency in situations where the outdoor temperatures drop below room temperature. This method will also provide a simple and rather cheap method for conducting heat in larger buildings into exactly the places, chosen by consumers.

Additionally, this method allows to adjust the air volumes, removed by means of natural ventilation, by floors (the position of dampers, valves, plafonds etc) and also the changes in outflow air volumes, caused by external factors (temperature, wind) (engine controlled by sensors along the axis, linking dampers or a separate engine for operating each damper).

Such a method can replace exhaust by natural ventilation into forced exhausted with heat exchanger; it gives an opportunity of adjusting air exchange in rooms, conducting all the air, removed by means of ventilation, through a heat exchanger.

### List of figures

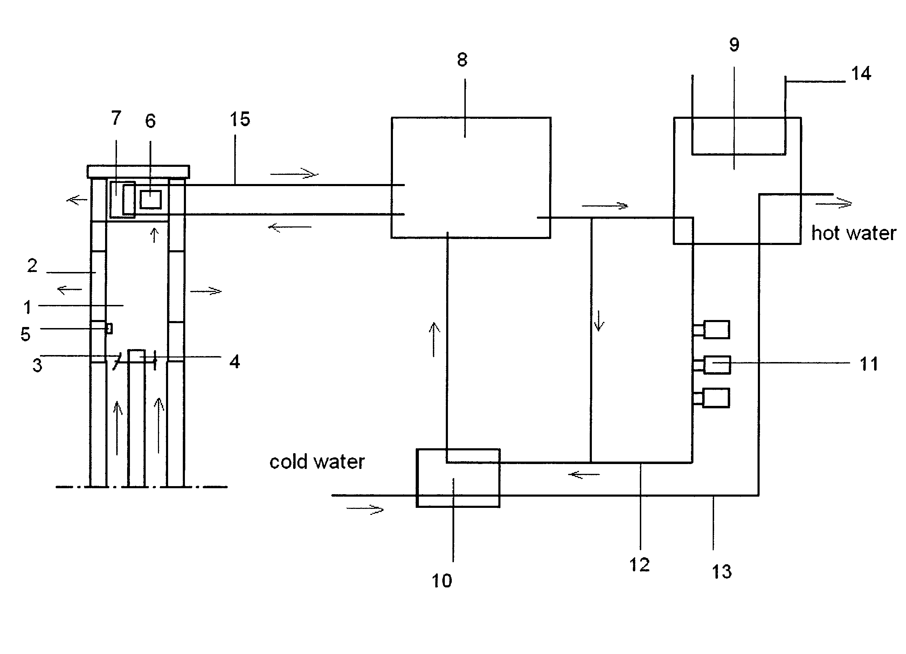

The figure depicts the working principle of the invention.

### Embodiment of the invention

A method for diminishing heat loss (through ventilation) in a panel-built nine-storey building with six staircases and 216 apartments, built in the 1970ies, has been described as a practical embodiment of implementing the invented method. The working principle of the invention has been depicted in the figure.

Air chamber 1 will be built (fitted) above the ventilation ducts to catch the heat, released by ventilation duct; ventilation covers 2 (adjustable in a preferred embodiment) are fitted to the side walls of the air chamber 1. Differences, due to differences in floors (lengths of ventilation ducts) can be adjusted by means of devices for adjusting air volumes 3 (damper, valve, plafond). Both ventilation covers 2 and devices for adjusting air volumes 3 can be, if appropriate, adjusted both mechanically and by means of an engine 4, which is controlled by sensor 5 (for example, air flow sensor, pressure sensor). This allows to diminish the capacity of outflow ventilation cover 2, as outdoor temperature drops (if the air flow rate in ventilation duct increases, pressure rises in air chamber 1) or close the devices for adjusting air volume 3, fitted to ventilation ducts. If engine 4, controlled by sensor 5, is used to adjust the devices for adjusting air volume 3, pressure sensor would be suitable for air chamber 1 and ventilation covers 2 should not be controlled by engines. Air-to-water heat exchanger 7 is located in upper part of the air chamber 1 and heat is conducted through the heat exchanger by a fan 6.

Fluid of supply line 15 of heat pump 8 will flow through the heat exchanger 7; the temperature of fluid is increased by means of warmed indoor air, and then flows into heat pump 8, giving additional heat (air coming from ventilation can be conducted through an air-to-water heat pump accordingly to one possible preferred embodiment). Heat pump 8 will be connected to returning (both heating and hot water) circulations lines 12, 13 of the top floor of the building. If the performance of heat pump 8 is insufficient to produce the required amount of heat, the heat carrying media will obtain the missing heat by passing through distance heating 14 heat exchanger 9.

In summer, when the heating system 11 is switched off, heating pump 8 will be providing hot water. Hot water may be produced with a two-system (heating and hot water producing) heat pump 8 or a separate heat exchanger 10 (heat storage unit).

The invention's advantage, compared to forced exhaust, is natural ventilation of the building, which shall continue to operate in the case of power failure, for example.

According to the estimates, such a method would help to save around 42% on heating bills and the profitability period would be, depending on the conditions of a loan, taken for investment purposes, four to five years.

A person skilled in the art would immediately understand that the scope of protection of an invention, disclosed in the claims, would not be limited to the given practical examples, but also includes solutions, which differ from the described solutions by features, irrelevant for the purposes of the nature of this invention.

## Claims

1. Method for using heat released through natural ventilation within a central heating system of a building and for producing hot water, a building will be fitted with natural ventilation, ventilation ducts will be fitted with devices for adjusting air volumes (3), the building shall have a heat exchanger (7) fitted with a fan (6), heating system (11) of the building will be fitted with a heat pump (8), providing extra heat, distance heating (14) heat exchanger (9) and a separate heat exchanger (10) for producing hot water, **characterized in that** by the fact that the heat, released by means of natural ventilation of the building, will be conducted into central heating system (11) of the building in such a way that air chamber (1) fitted with ventilation covers (2) will be fitted above ventilation ducts; heat exchanger (7) fitted with a fan (6) will be placed in the upper part of the air chamber (1); fluid of supply line (15) of heat pump (8) will flow through the heat exchanger( 7); the temperature of fluid in supply line (15) is increased by means of warmed indoor air released by natural ventilation, and then flows into heat pump (8) and the heat pump (8) will be connected to returning heating (12) and hot water (13) circulation lines; the temperature of water will be increased for the heating system and hot water of the building and the operation of natural ventilation is adjusted at the same time.

2. Method accordingly to claim 1, **characterized in that** warmed indoor air, released by ventilation, will increase the productivity of heat pump (8), if the outdoor temperature drops below indoor temperature.

3. Method accordingly to claim 1 and 2, **characterized in that** should the heat, produced with warmed indoor air, released by ventilation, be insufficient, the additional heat will be obtained from distance heating (14) heat exchanger (9).

4. Method accordingly to any claim from 1 to 3, **characterized in that** a heat pump (8), using ventilation heat, will be used to produce hot water, when the heating system (11) is switched off.

5. Method accordingly to any claim from 1 to 4, **characterized in that** a two-system heat pump (8) will be used.

6. Method accordingly to any claim from 1 to 5, **characterized in that** a air-to-water heat exchanger (7) will be used.

7. Method accordingly to any claim from 1 to 6, **characterized in that** a separate heat exchanger (10) will be used to produce hot water, when the heating system (11) is switched off.

8. Method accordingly to any claim from 1 to 7, **characterized in that** an water-to-water heat exchanger will be used as a separate heat exchanger (10).

9. Method accordingly to any claim from 1 to 8, **characterized in that** devices for adjusting air volumes (3) and ventilation covers (2) are adjustable.

10. Method accordingly to any claim from 1 to 9, **characterized in that** devices for adjusting air volumes (3) and ventilation covers (2) will be adjusted mechanically.

11. Method accordingly to any claim from 1 to 10, **characterized in that** devices for adjusting air volumes (3) will be adjusted electronically by means of an engine (4), which is controlled with a sensor (5).

12. Method accordingly to any claim from 1 to 11, **characterized in that** ventilation covers (2) will be adjusted mechanically.

13. Method accordingly to any claim from 1 to 12, **characterized in that** ventilation covers (2) will be adjusted electronically by means of an engine (4), which is controlled with a sensor (5).

14. Method accordingly to any claim from 1 to 13, **characterized in that** natural ventilation of a building will be transformed into forced ventilation with a heat exchanger, conducting air volumes, meeting the standard, through a heat exchanger (7).
